(19) Europäisches Patentamt
European Patent Office
Office européen des brevets

(11) **EP 2 463 139 A2**

(12) **EUROPEAN PATENT APPLICATION**

(43) Date of publication:
**13.06.2012 Bulletin 2012/24**

(51) Int Cl.:
***B60L 11/18*** *(2006.01)*

(21) Application number: **11175924.7**

(22) Date of filing: **29.07.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.12.2010 US 420889 P
02.06.2011 US 152060**

(71) Applicant: **Industrial Technology Research
Institute
Chutung Hsinchu 31040 (TW)**

(72) Inventors:
• **Lei, Ying-Chieh
300 Hsinchu City (TW)**
• **Chiang, Tsun-Chien
500 Changua County (TW)**
• **Ho, Ping-Fan
115 Taipei City (TW)**

(74) Representative: **Schwabe - Sandmair - Marx
Patentanwälte
Stuntzstraße 16
81677 München (DE)**

(54) **Systems and methods for charging battery systems of electric vehicles**

(57) An electric vehicle charging-control system includes a charge-monitoring device coupled with a battery system of an electric vehicle, a processor coupled with the charge-monitoring device, and a communication interface coupled with the processor. The charge-monitoring device may detect the charging conditions of an electricity charge provided from a charging device to the battery system for charging the battery system, and the processor may determine whether the charging conditions exceed a tolerance criteria associated with at least one of the charge-monitoring device, the battery system, and the electric vehicle. The communication interface may communicate to the charge-monitoring device, a charge-receiving device, and/or the charging device at least one of a charging instruction and a charging indication provided by the processor based on a determination of whether the charging conditions exceed the tolerance criteria.

**Figure 1**

## Description

This Application claims priority from U.S. provisional application no. 61/420,889 filed on December 8, 2010, the entirety of which is incorporated by reference herein.

## BACKGROUND

### Technical Field

This application relates in general to systems and methods for charging the battery systems of electric vehicles and, in particular, to systems and methods for monitoring, detecting, and/or controlling the process of charging battery systems.

### Description of the Related Art

Electric vehicles offer an alternative option for transportation and, in some instances, may provide certain benefits compared to vehicles using traditional fuels. Those benefits may vary by applications and designs of electric vehicles, but examples may include, reduced pollution and/or emission, improved energy efficiency, increased reliability, reduced maintenance needs, and/or less reliance on the limited supply of traditional fuels. Electric vehicles and their related innovations and applications also became part of the many green technologies that may result in reduced greenhouse gas, achieve energy recycle or conservation, and use renewable energy resources such as fuel cells and/or battery systems that may be charged using braking power, solar power, or other power sources. Battery systems, one of the main power sources for electric vehicles, have their applications in many known electric vehicles, such as the Chevrolet Volt®, the Telsa Roadster®, the Nissan Leaf®, etc.

Battery systems used in electric vehicles are charged regularly. However, different battery systems may have different charging requirements, designs, ages, cell arrangements, materials, operational conditions, etc. that may affect the charging process or its control. Furthermore, different charging devices or stations may provide different charging conditions, affecting how the battery systems are charged or how they receive their electricity charges. Owners of a vehicle may be interested in staying informed about the charging process, billing accuracy, and/or other aspects of charging electric vehicles.

Many of the current charging devices, stations, or electric vehicles lack appropriate systems or methods for controlling or observing the charging process, billing accuracy, and/or other aspects of charging electric vehicles. The lack of appropriate systems and/or methods may result in inaccuracy, lack of transparency, uncertainty, lack of confidence, possible disputes, and liability as a result of charging glitches. Therefore, it may be desirable to have systems and/or methods for charging battery systems that offer some monitoring or controlling characteristics not available or not properly-implemented in traditional systems, methods, or electric vehicles.

## SUMMARY

One of the disclosed embodiments provides a method for controlling a charging process for an electric vehicle. The method may include monitoring a process of providing an electricity charge from a charging device to a battery system of the electric vehicle to charge the battery system; detecting, by a detection module, a charge-receiving device, and/or the charging device, the charging conditions of the electricity charge supplied to the battery system; and determining, by a computing module, the charge-receiving device, and/or the charging device, whether the charging conditions exceed a tolerance criteria associated with the charge-receiving device, the battery system, and/or the electric vehicle. The method may further include notifying at least one of the charging device and the charge-receiving device of at least one of a charging instruction and a charging indication based on a determination of whether the charging conditions exceed the tolerance criteria.

The disclosed embodiments also provide an electric vehicle charging-control system, which may include a charge-monitoring device coupled with a battery system of an electric vehicle, a processor coupled with the charge-monitoring device, and a communication interface coupled with the processor. The charge-monitoring device may detect the charging conditions of an electricity charge provided from a charging device to the battery system for charging the battery system, and the processor may determine whether the charging conditions exceed a tolerance criteria associated with at least one of the charge-monitoring device, the battery system, and the electric vehicle. The communication interface may communicate to the charge-monitoring device, a charge-receiving device, and/or the charging device at least one of a charging instruction and a charging indication provided by the processor based on a determination of whether the charging conditions exceed the tolerance criteria.

The disclosed embodiments further provide an electric vehicle charging system. The system may include a detection device coupled with a battery system of an electric vehicle, a processor coupled with the detection device, and a communication interface coupled with the processor. The detection device may detect charging conditions of an electricity charge provided from a charging device to the battery system, and the processor may determine whether the charging conditions exceed a tolerance criteria associated with at the charge-monitoring device, the battery system, and/or the electric vehicle. The communication interface may be configured to provide at least one of a charging instruction and a charging indication from by the processor based on the processor's determination of whether the charging conditions exceed the tolerance criteria associated with the charging device, the battery system, and/or the electric vehicle.

**BRIEF DESCRIPTION OF DRAWINGS**

Embodiments disclosed herein can be more fully understood by reading the subsequent detailed description and examples with references made to the accompanying drawings, wherein:

Figure 1 illustrates an exemplary charging process that may be applied in a typical charging system;

Figure 2 illustrates a block diagram of an exemplary electric vehicle charging-control system consistent with the disclosed embodiments;

Figure 3 shows a flow chart illustrating an exemplary method for controlling a charging process for an electric vehicle consistent with the disclosed embodiments;

Figure 4 shows a block diagram illustrating another exemplary charging system consistent with the disclosed embodiments; and

Figure 5 shows an exemplary flow chart of a charging process consistent with the disclosed embodiments.

**DESCRIPTION OF EMBODIMENTS**

Battery systems and their characteristics, such as their abilities to receive charges, charging rates, charging current and/or voltages, other charging requirements, and other aspects of receiving charges, may vary significantly. For example, battery systems' designs, ages, cell arrangements, materials, operational conditions, temperature, remaining charges, memory effects, capacities, etc. may independently or jointly affect their charging requirements or their desirable charging conditions. While different charging devices or stations, which may also provide different charging conditions, can be somewhat standardized or regulated, a battery systems' own conditions or deterioration may affect the actual amount being charged, which may be a lot less than what is recorded and billed by the charging devices or stations.

There are standards regarding battery or electric-vehicle charging that are being considered, proposed, discussed, or concluded for regulating the charging process and standards. Examples include the proposals from Society of Automotive Engineers ("SAE"), including J1772 for the charging plugs, J1773 for non-contact charging, J2293 for EV energy transfer system, and J2836, and J2847 for additional aspects of battery-charging.

In contrast to the fuel-dispensing roles of traditional gasoline stations, the electric-vehicle charging process should not be limited to the mere transmission of electricity, but may involve communications between systems, hardware components, or system software modules. Although some SAE and other standards may regulate charging voltage or current conditions, flexibilities and variations remain regarding charging conditions and/or charging process control. As an example, fast charging involves using high voltage and/or current to reduce charging and waiting times, but different electric vehicles or battery systems may have different criteria for fast charging. Incorrect or improper charging involving high voltage and/or current undesirable to particular vehicles or battery systems may result in permanent damage to some components of the vehicles or battery systems and invite liabilities for the resulting damages. In some other embodiments, charging systems or stations may need to consider the overall load of the surrounding neighborhood so intense or concentrated and significant usage of power does not affect others' use of electricity. The charging rate may also affect the waiting time for vehicle users, causing long lines or long waits at charging stations. As electric vehicles become popular, owners of homes, electric vehicles, parking garages, and retail stores may purchase or sell electricity, accomplishing the concept of "smart grid" but also resulting in the need for appropriate monitoring and fee-computing methods, systems, or mechanisms.

To address the complexity of certain charging processes, the disclosed embodiments may provide methods and systems that offer the monitoring of charging processes, the communications between different components or devices involved in the charging processes, and/or controlling of some or all aspects of the charging processes.

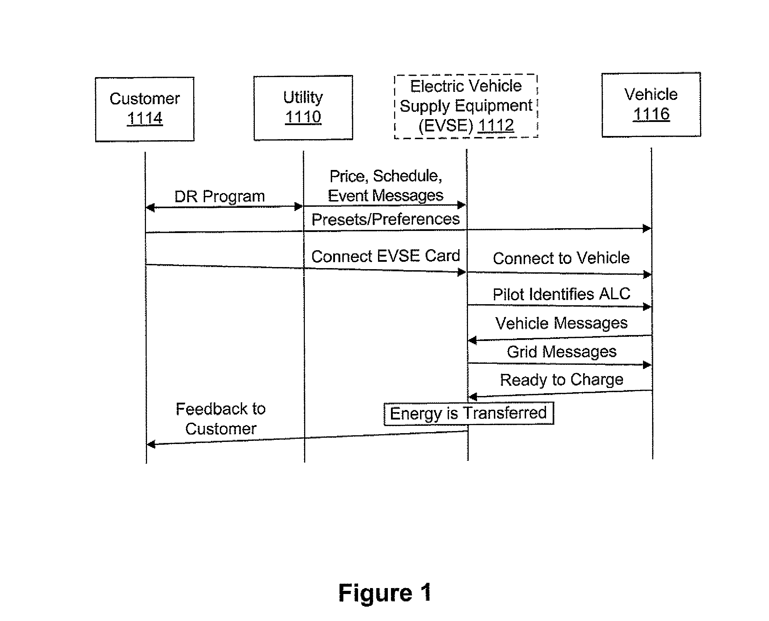

Figure 1 illustrates an exemplary charging process that may be applied in a typical charging system. The illustrated example reflects an embodiment similar to what is currently being discussed as a possible charging process for the standard protocol for charging electric vehicles. However, the current standard being considered, while having some communications prior to initiating a charging process, lacks the ability to allow or provide communications during a charging process. Referring to Figure 1, in one example, the utility company (utility) 1110 may set prices for electricity supplied to charging devices or stations, such as electric vehicle supply equipment (EVSE) 1112. Customer 1114 or the customer's vehicle may have some preferences or setting, which may enable the EVSE 1112 to charge a battery of vehicle 1116 based on the required amount of electricity and the preferences or settings. A measurement device within or coupled with EVSE 1112 may measure the amount of electricity transmitted and proceed with billing. Typically, there may be some communications or messages regarding various items that are sent, received, or exchanged, such as messages regarding available line current(ALC), price, schedule, event, presets/preferences, ready-to-charge status, and feedback or billing to customer 1114. Connections or electricity or signal couplings may be made, such as EVSE and vehicle connections or couplings. In some embodiments, the communications or message exchange may include optional, but not necessary, communications such as demand-response program ("DR Program"), as well as "Pilot Identifies ALC," which can be a communication to indicate the "Available Line Current." These messages, connections, and or events generally occur before the charging process and before the energy or electricity is transferred. Embodiments disclosed herein may provide additional communication(s), detections, and/or control during charging processes for electric vehicles. Depending on the implementations, designs, settings, and functions of various devices, a user or a system may be better informed regarding the charging process and/or may have some or more control over the charging process, charging conditions, billing accuracies, and other aspects of the charging process.

In some embodiments, charging processes may differ significantly from traditional fuel-dispensing processes. The conditions (such as one or more of the conditions described above), circuitries, designs, and other characteristics of electric vehicles and their battery systems may affect the charging process, causing the amount of charge received by the battery cells to differ from the amount of electricity transmitted by a charging device. The differences may invite disputes for discrepancies, increase the cost of time and/or money for consumers or businesses operating charging stations, and/or impact businesses. In some embodiments, the lack of sufficient information regarding the charging process also may make proper dispute resolution or later verifications difficult. The methods and systems described in the disclosed embodiments may be implemented, modified, and/or configured to avoid the undesirable discrepancies, lack of record, and/or lack of adequate charging-process control.

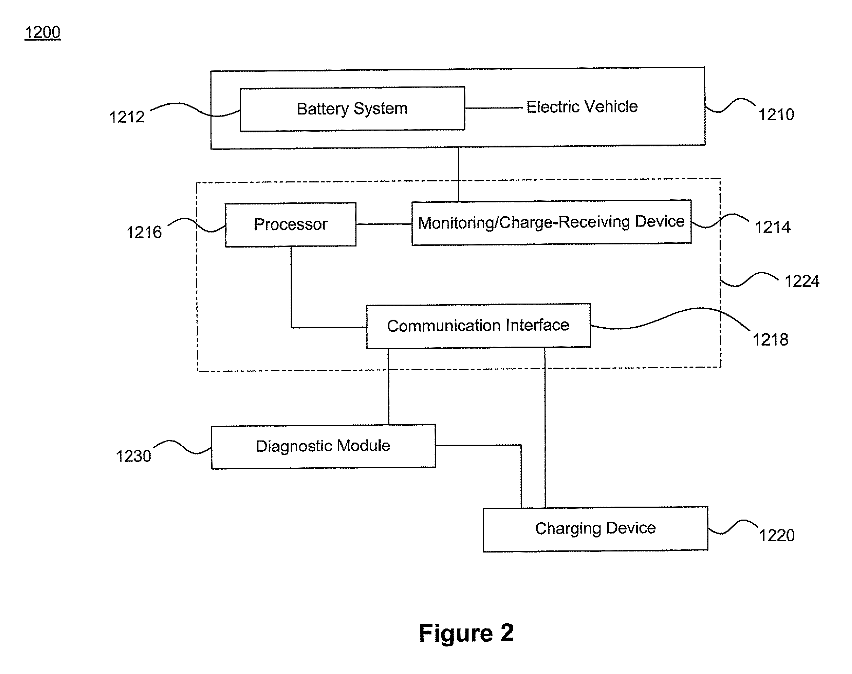

Figure 2 illustrates a block diagram of an exemplary electric vehicle charging-control system 1200. The system 1200 may include a battery system 1212 of an electric vehicle 1210, a monitoring or charge-receiving device 1214, a processor 1216, and a communication interface 1218. In some embodiments, monitoring/charge-receiving device 1214 may be coupled with battery system 1212 to detect charging conditions of the electricity charge from charging device 1220, which may be a charging station for charging battery system 1212. Processor 1216 may be coupled with the monitoring/charge-receiving device 1214 to determine whether the charging conditions exceed a tolerance criteria associated with one or more of monitoring/charge-receiving device 1214, battery system 1212, and electric vehicle 1210. Communication interface 1218 may be coupled with processor 1216 to communicate to charging device 1220 a charging instruction or charging indication provided by processor 1216 based on a determination of whether the charging conditions exceed the tolerance criteria. In some embodiments, one or more of monitoring/charge-receiving device 1214, processor 1216, and communication interface 1218, which may be combined as a monitoring system 1224 or installed or added separately, may be 1) part of a stand-alone device, 2) coupled with or installed in an electric vehicle, 3) part of a charging system, such as being a part of a charging station, or 4) a part of the electric vehicle's charge-receiving or control system.

In some embodiments, electric vehicle charging-control system 1200 may also include a diagnostic module 1230 for analyzing charging information, such as one or more of the charging information received from charging device 1220, information regarding conditions of battery system 1212, and other components of electric vehicle 1210. The charging device 1220, which may be a charging station or part of a charging station, may include multiple components, such as one or more of a connector module, a tolerance calculator module, a diagnostic module, a notification module, a meter module, a communication module, and a log module.

In some embodiments, charging device 1220 in Figure 2 may be a charging module of an electric-vehicle charging station. Battery system 1212 may include multiple rechargeable battery cells that may be arranged serially, in parallel, or in a combination of both types of arrangements. For the charging instruction, it may include one or more of a stop-charging instruction, a continue-charging instruction, a charging characteristic modification instruction, a charging-current control instruction, and a charging-voltage control instruction. For the charging indication, it may include one or more charging instructions or include the information about the charging conditions and/or computation/determination results for another device's storage, evaluation, or processing. In some embodiments, monitoring/charge-receiving device 1214 may include one or several components, such as a charging meter, a tolerance calculator, a notification module, and a diagnostic module. To provide a way of communications between different components, communication interface 1218 may rely on one of the wired or wireless communication mechanisms, such as Ethernet, cable, Zigbee, CAN bus, Powerline Communication, WAVE(Wireless Access in Vehicular Environments)/DSRC (dedicated short range communications), Wi-Fi, 3G (3GPP, 3GPP2, 3GPP LTE (long term evaluation)), 3.5G, 4G, and WiMAX communication protocols.

The tolerance criteria may be set in various different ways and by different entities (such as car manufacturers, battery suppliers, rental car companies, dealerships, mechanics, state or federal regulations, etc.) or by different users (such as vehicle owners, drivers, passengers, fleet administrators, etc.). As illustrative and non-exhaustive examples, a charging tolerance value may be set as:

$$\frac{|PowerTransmittedBytheChargingDevice - PowerReceivedBytheChargeReceiveingDevice|}{PowerTransmittedBytheChargingDevice}$$

, which may represent a charging tolerance value in charging device 1220,

$$\frac{|PowerReceicvedBytheChargeReceivingDevice - PowerTransmittedBytheChargingDevice|}{PowerReceivedBytheChargeReceivingDevice}$$

, which may represent a charging tolerance value in monitoring/charge-receiving device 1214,
a value based on some other formulas, or various mathematical combinations of any of these or other values.

In some embodiments, the charging conditions exceed tolerance criteria when the charging tolerance value exceeds a number that is user-configurable or configured based on the charge-receiving device, the battery system, the electric vehicle, or other characteristics. For example, using the first or second formula illustrated above, the threshold number may be 3%, 5%, 10%, 20%, or a higher or intermediate number. In some embodiments, processor 1216 may determine periodically, based on time or the amount of electricity flow, or during the charging process whether the charging conditions exceed the tolerance criteria.

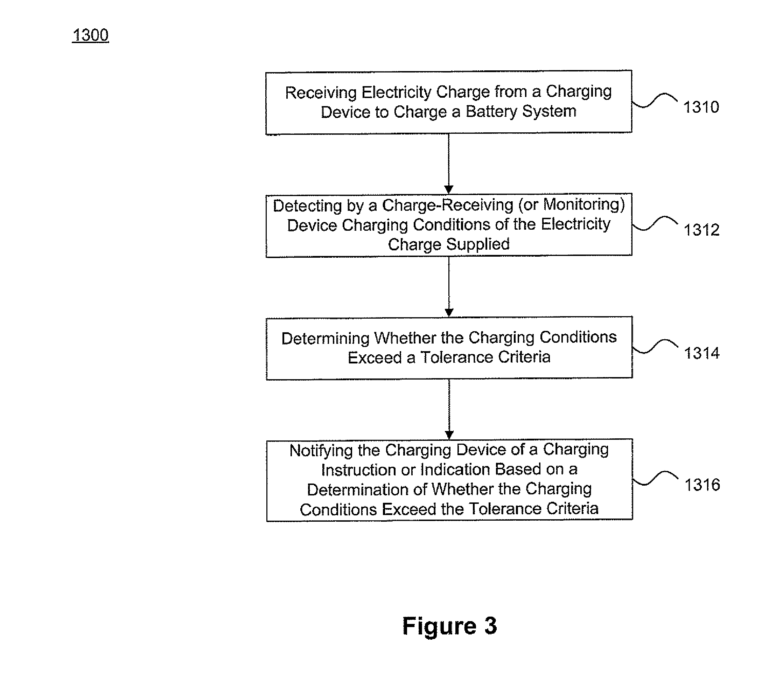

Figure 3 shows a flow chart illustrating an exemplary method for controlling a charging process for an electric vehicle. Referring to Figure 3, the method 1300 may include the steps of receiving electricity charge (step 1310), detecting charging conditions (step 1312), determining whether the charging conditions exceed a tolerance criteria (step 1314), and notifying the charging device of a charging instruction (step 1316). Step 1310 may include receiving electricity charge from a charging device to charge a battery system of the electric vehicle, and step 1312 may involve detecting by a charge-receiving (or monitoring) device charging conditions of the electricity charge supplied to the battery systems. Step 1314 may include determining whether the charging conditions exceed a tolerance criteria associated with at least one of the charge-receiving device, the battery system, and the electric vehicle or its other components. Step 1316 may include notifying the charging device of a charging instruction or indication based on a determination of whether the charging conditions exceed the tolerance criteria. Method 1300 and its variations may be implemented using various systems, such as using some or all of the various components illustrated above in Figure 2, or known to one skilled in the art. In some embodiments, the tolerance criteria may be set in different ways and by different entities or by different users as discussed above and using the illustrative and non-exhaustive examples discussed above or using some other formulas.

In various embodiments, the systems and methods may use one or more of various devices, such as a communication unit, a meter, a tolerance calculator, a notification module, and a diagnostic module with configurations similar to or different from those illustrated in Figure 2. Using Figure 2 as an example, one or more of those devices may be incorporated as a part of monitoring/charge-receiving device 1214, charging (charge-transmitting) module or device 1220, and/or electric vehicle 1210. Systems and methods of the disclosed embodiments may, in some applications, ensure that electricity charged remain substantially accurate or within certain tolerance ratio. In some embodiments, all or certain portions of the charging information may be recorded, which may be used for assessment or dispute resolution, such as by a third party.

In some embodiments, the amount of power or electricity transmitted by charging device 1220 may be obtained by a meter, such as a meter associated with or incorporated within charging device 1220, and the amount of electricity (value/amount of power) received by monitoring/charge-receiving device 1214 may be obtained by a meter, such as a meter associated with or incorporated within monitoring/charge-receiving device 1214.

In some embodiments, information may be exchanged between charging device 1220, monitoring/charge-receiving device 1214, or their communication interfaces or modules, allowing a charging tolerance value to be computed periodically. If the obtained result is greater than a threshold, such as a numerical or percentage threshold, monitoring/charge-receiving device 1214 and/or charging device 1220 may notify the owners and/or users of the electric vehicle and issue or wait for instructions, e.g. stopping the charging process, continuing the charging process, or making other adjustments as illustrated above. Embodiments consistent with the disclosure may also provide methods or systems to log all charging information in one or more remote servers or local devices, which may be validated or examined by a third party.

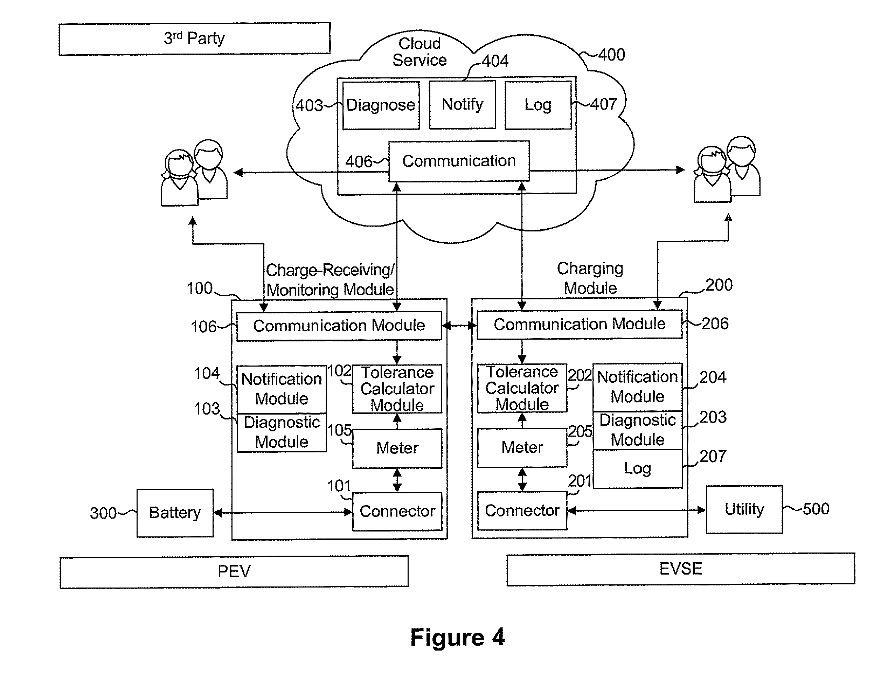

Figure 4 shows a block diagram illustrating another exemplary charging system consistent with embodiments of the disclosure and alternative to or varied from the configuration illustrated in Figure 2 and discussed above. While the various modules illustrated here may be the same or similar to the various devices illustrated in Figure 2, they may also vary from what Figure 2 illustrated and may be modularized, may be made of application specific processors or other circuitry, and may be in the form of components, chipsets, or independent or combined modules.

In one embodiment, battery or battery system 300 is the battery to be charged, which may be one battery or a combination of multiple battery cells, either standalone or in a vehicle, such as an electric or hybrid vehicle. The components of the charging system may include, for example, one or more of a charge-receiving/monitoring device or module 100, a charging device or module 200, a battery 300, an utility 500 (or a power source), a local or remote device 400 accessible by or associated with a third party. Methods to observe monitor, or control whether an appropriate electricity charge is received or is received within an expected tolerance value are also illustrated further below.

Charge-receiving/monitoring module 100 may include one or more of connector module 101, tolerance calculator module 102, diagnostic module 103, notification module 104, meter module 105, and communication module 106. Charge-receiving/monitoring module 100, for example, can be installed in a vehicle carrying battery 300, and connector module 101 may be coupled with connector module 201 of charging module 200 for receiving power from charging module 200. Meter module 105 may measure the amount of electricity received from charging module 200. In some embodiments, the measurements may occur periodically, based on time, based on the amount of electricity flow, or at request, such as by a request from a user or a device in the system. Communication module 106 can communicate the charging information with the communication module 206 of charging module 200. Examples of a communication module may include a wired device like an Ethernet, CAN bus or cable-line interface, a wireless device like Zigbee, WAVE/ DSRC, Wi-Fi, 3G (3GPP, 3GPP2, 3GPP LTE (long term evaluation)), 3.5G, 4G, and WiMAX or any other communication or information access technologies.

Tolerance calculator module 102 can collect charging information from communication module 106 and/or meter module 105 to calculate the charging tolerance value. If charging tolerance value exceeds a threshold, it may trigger communication module 106 to send a stop-charging message or other instructions to charging module 200.

Diagnostic module 103 can analyze charging information received from charging module 200 to evaluate or compare with the condition of charge-receiving module 100, battery 300, or other components of the system. Diagnostic module 103 may inform a 3rd Party to conduct a diagnosis in some cases or when it is necessary. Notification module 104 can trigger or cause communication module 106 to send notification to a user when the charging tolerance value exceeds the threshold, allowing the user to decide whether to continue charging.

Charging module 200 can provide charging services, and it may include connector module 201, tolerance calculator module 202, diagnostic module 203, notification module 204, meter module 205, communication module 206, and log module 207. Connector module 201 may be used connect to charge-receiving/monitoring module 100 and transmit power to charge-receiving/monitoring module 100. Meter module 205 may measure the amount of electricity transmitted to charge-receiving/monitoring module 100. Communication module 206 may exchange certain charging information with charge-receiving/monitoring module 100 or its communication module 106.

Tolerance calculator module 202 can collect charging information from communication module 206 and meter module 205, and may provide or derive the charging tolerance value. If the charging tolerance value exceeds the threshold, it may trigger or cause communication module 206 to send a stop-charging message or other instructions discussed above to charge-receiving/monitoring module 100.

Diagnostic module 203 can analyze charging information received from charge-receiving/monitoring module 100 to evaluate or compare with the condition of charge-receiving/monitoring module 100, battery 300, or other components of the system. It may inform a 3rd Party to conduct a diagnosis under certain conditions or when it is necessary. Notification module 204 can trigger or cause communication module 206 to send a notification to a user when the charging tolerance value exceeds the threshold, allowing the user to decide whether to continue or stop charging. Log module 207 can log all or some of the charging information obtained during the charging process. Utility or power source 500, for example, may be a public power utility provider that can transmit power to charging module 200.

In some embodiments, 3rd Party cloud service 400 may maintain a remote server including communication module 406, diagnostic module 403, notify module 404, and log module 407. Communication module 206 can communicate with charge-receiving/monitoring module 100 and charging module 200 by a pre-defined protocol and collect charging information from either or both of them. Diagnostic module 403 can analyze charging information received from communication module 406 to determine the condition of charge-receiving module/monitoring 100, battery 300, or other components of the system. It may use notification module 404 to communicate with a user, user devices, or others. Log module 407 can log charging information received from charge-receiving/monitoring module 100 and charging module 200.

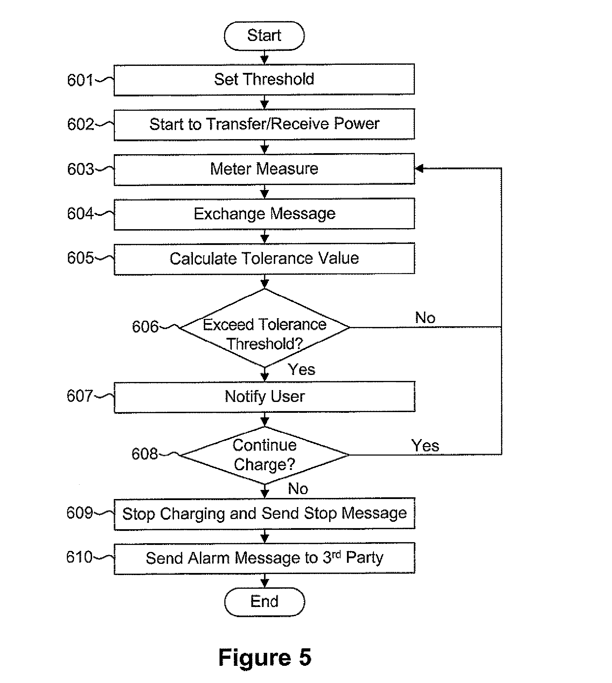

Figure 5 shows an exemplary flow chart of a charging process, which may involve the use of a charge-receiving module or device and/or a charging module or device illustrated in Figure 4 or other figures. In "Set Threshold" step 601, one or both of charge-receiving/monitoring module 100 and charging module 200 can set its permitted tolerance threshold jointly or separately. In "Start to transfer/receive power" step 602, charging module 200 may start to transmit power to charge-receiving/monitoring module 100, and charge-receiving/monitoring module 100 may start to receive power from charging module 200. In "Meter measure" step 603, Meter module 105 of charge-receiving/monitoring module 100 may measure the amount of electricity received from charging module 200, and meter module 205 of charging module 200 may measure the amount of electricity transmitted to charge-receiving/monitoring module 100.

In "Exchange message" step 604, charge-receiving/monitoring module 100 may send, via communication module 106, a charging or information message containing information regarding the amount of electricity received, which may be measured by meter module 105, and may receive the charging message sent by charging module 200. Charging module 200 may send, via communication module 206, a charging or information message of transmitted power quantities, which may be measured by meter module 205, and may receive the charging or information message sent by charge-receiving/monitoring module 100. In "Calculate tolerance value" step 605, tolerance calculator module 102 of charge-receiving/monitoring module 100 may use charging messages obtained from step 603 and/or step 604 to provide or derive charging tolerance value as illustrated above. Similarly, tolerance calculator module 202 of charging module 200 may use charging or information messages obtained from step 603 and/or step 604 to calculate charging tolerance value as illustrated above.

In "Exceed tolerance threshold" step 606, tolerance calculator module 102 of charge-receiving/monitoring module 100 may check if the charging tolerance value obtained in step 605 exceeds the threshold set in step 601. If it does, charge-receiving/monitoring module 100 may proceed with step 607. If it does not, charge-receiving/monitoring module 100 may go back to step 603 for the next iteration. In "Exceed tolerance threshold?" step 606, tolerance calculator module 202 of charging module 200 may check if the charging tolerance value obtained at step 605 exceeds the threshold set at step 601. If it does, charging module 200 may proceed with step 607. If it does not, charging module 200 may go back to step 603 to proceed with the next iteration.

In "Notify user" step 607, charge-receiving/monitoring module 100 may notify and interact with user to determine whether to continue charging, and so does charging module 200. In "Continue charge?" step 608, if the user decides to pass the notification, the charging may continue, and the process may go back to step 603. Otherwise, step 609 may be performed. In "Send stop charging message" step 609, if charge-receiving/monitoring module 100 decides to stop charging, it may send a stop-charging message to charging module 200. If charging module 200 decides to stop charging, it may send a stop-charging message to charge-receiving/monitoring module 100. In "Send alarm message to 3rd party" step 610, charge-receiving module 100, charging module 200, or both may individually send charging information to a remote server maintained by 3rd Party.

In various embodiments, modifications and variations can be made in the disclosed process, including changing the order or number of steps or rearranging, adding, or removing certain devices or modules, without departing from the scope or spirit of the disclosed subject matter. Other embodiments of the disclosed embodiments will be apparent to those skilled in the art from consideration of the specification and practice of the subject matter disclosed herein. It is intended that the specification and examples be considered as exemplary only.

**Claims**

1. A method for controlling a charging process for an electric vehicle, the method comprising:

   monitoring a process of providing an electricity charge from a charging device to a battery system of the electric vehicle to charge the battery system;
   detecting, by at least one of a detection module, a charge-receiving device, and
   the charging device, charging conditions of the electricity charge supplied to the battery system;
   determining, by at least one of a computing module, the charge-receiving device, and the charging device, whether the charging conditions exceed a tolerance criteria associated with at least one of the charge-receiving device, the battery system, and the electric vehicle; and
   notifying at least one of the charging device and the charge-receiving device of at least one of a charging instruction and a charging indication based on a determination of whether the charging conditions exceed the tolerance criteria.

2. The method of claim 1, wherein at least one of the detecting module and the computing module is a part of the electric vehicle.

3. The method of claim 1, wherein the battery system comprises multiple rechargeable battery cells.

**4.** The method of claim 1, wherein the charging instruction comprises at least one of a stop-charging instruction, a continue-charging instruction, a charging characteristic modification instruction, a charging-current control instruction, and a charging-voltage control instruction.

**5.** The method of claim 1, wherein the charge-receiving device communicates with the charging device via a communication interface to provide the at least one of the charging instruction and the charging indication.

**6.** The method of claim 1, wherein the tolerance criteria is based on a charging tolerance value, which comprises at least one of:

$$\frac{|PowerTransmittedBytheChargingDevice - PowerReceivedBytheChargeReceiveingDevice|}{PowerTransmittedBytheChargingDevice}$$

and

$$\frac{|PowerReceicvedBytheChargeReceivingDevice - PowerTransmittedBytheChargingDevice|}{PowerReceivedBytheChargeReceivingDevice}$$

**7.** The method of claim 6, wherein the charging conditions exceed tolerance criteria when the charging tolerance value exceeds a number that is user-configurable or configured based on at least one of the charge-receiving device, the battery system, and the electric vehicle.

**8.** The method of claim 1, wherein at least one of the determination of whether the charging conditions exceed tolerance criteria and the notification of the at least one of the charging instruction and the charging indication occur periodically or during the process of providing an electricity charge from the charging device to the battery system.

**9.** An electric vehicle charging-control system comprising:

a charge-monitoring device coupled with a battery system of an electric vehicle,
the charge-monitoring device detecting charging conditions of an electricity charge from a charging device to the battery system for charging the battery system;
a processor coupled with the charge-monitoring device, the processor determining whether the charging conditions exceed a tolerance criteria associated with at least one of the charge-monitoring device, the battery system, and the electric vehicle; and
a communication interface coupled with the processor, the communication interface communicating to at least one of the charge-monitoring device, a charge-receiving device, and the charging device at least one of a charging instruction and a charging indication provided by the processor based on a determination of whether the charging conditions exceed the tolerance criteria.

**10.** The electric vehicle charging-control system of claim 9, wherein at least one of the detecting module and the computing module is a part of the electric vehicle.

**11.** The electric vehicle charging-control system of claim 9, wherein the battery system comprises multiple rechargeable battery cells.

**12.** The electric vehicle charging-control system of claim 9, wherein the charging instruction comprises at least one of a stop-charging instruction, a continue-charging instruction, a charging characteristic modification instruction, a charging-current control instruction, and a charging-voltage control instruction.

**13.** The electric vehicle charging-control system of claim 9, wherein the charge-monitoring device comprises at least one of a charging meter, a tolerance calculator, a notification module, and a diagnostic module and the charge-monitoring device is a portion of a stand-alone monitoring device, the charging device, and the charge-receiving device.

14. The electric vehicle charging-control system of claim 9, wherein the tolerance criteria is based on a charging tolerance value, which comprises at least one of:

$$\frac{|PowerTransmittedBytheChargingDevice - PowerReceivedBytheChargeReceiveingDevice|}{PowerTransmittedBytheChargingDevice}$$

and

$$\frac{|PowerReceicvedBytheChargeReceivingDevice - PowerTransmittedBytheChargingDevice|}{PowerReceivedBytheChargeReceivingDevice}$$

15. The electric vehicle charging-control system of claim 14, wherein the charging conditions exceed tolerance criteria when the charging tolerance value exceeds a number that is user-configurable or pre-determined.

16. The electric vehicle charging-control system of claim 9, wherein the processor determines whether the charging conditions exceed tolerance criteria periodically or during a process of providing the electricity charge from the charging device to the battery system.

17. The electric vehicle charging-control system of claim 9, wherein the communication interface comprises a device that communicates based on at least one of Ethernet, cable, Zigbee, CAN Bus, Powerline Communication, WAVE/ DSRC, Wi-Fi, 3.5G, and WiMAX communication protocols.

18. The electric vehicle charging-control system of claim 9, further comprising a diagnostic module for analyzing at least one of charging information received from the charging device, conditions of the battery system, and components of the electric vehicle.

19. The electric vehicle charging-control system of claim 9, wherein the charging device comprises at least one of a connector module, a tolerance calculator module, a diagnostic module, a notification module, a meter module, a communication module, a log module.

20. An electric vehicle charging system comprising:

a detection device coupled with a battery system of an electric vehicle, the detection device detecting charging conditions of an electricity charge from a charging device to the battery system;
a processor coupled with the detection device, the processor determining whether the charging conditions exceed a tolerance criteria associated with at least one of the charge-monitoring device, the battery system, and the electric vehicle; and
a communication interface coupled with the processor, the communication interface being configured to provide at least one of a charging instruction and a charging indication from by the processor based on the processor's determination of whether the charging conditions exceed the tolerance criteria associated with at least one of the charging device, the battery system, and the electric vehicle.

**Figure 1**

Vehicle 1116

Electric Vehicle Supply Equipment (EVSE) 1112

Utility 1110

Customer 1114

Connect to Vehicle

Pilot Identifies ALC

Vehicle Messages

Grid Messages

Ready to Charge

Energy is Transferred

Price, Schedule, Event Messages

Presets/Preferences

Connect EVSE Card

DR Program

Feedback to Customer

EP 2 463 139 A2

1200

**Figure 2**

Receiving Electricity Charge from a Charging Device to Charge a Battery System — 1310

Detecting by a Charge-Receiving (or Monitoring) Device Charging Conditions of the Electricity Charge Supplied — 1312

Determining Whether the Charging Conditions Exceed a Tolerance Criteria — 1314

Notifying the Charging Device of a Charging Instruction or Indication Based on a Determination of Whether the Charging Conditions Exceed the Tolerance Criteria — 1316

**Figure 3**

EP 2 463 139 A2

**Figure 4**

```
                            ╭─────────╮
                            │  Start  │
                            ╰────┬────╯
                                 ▼
                    ┌──────────────────────────┐
      601───────────│      Set Threshold       │
                    └────────────┬─────────────┘
                                 ▼
                    ┌──────────────────────────┐
      602───────────│ Start to Transfer/Receive Power │
                    └────────────┬─────────────┘
                                 ▼
                    ┌──────────────────────────┐
      603───────────│      Meter Measure       │◄──────────┐
                    └────────────┬─────────────┘           │
                                 ▼                         │
                    ┌──────────────────────────┐           │
      604───────────│     Exchange Message     │           │
                    └────────────┬─────────────┘           │
                                 ▼                         │
                    ┌──────────────────────────┐           │
      605───────────│  Calculate Tolerance Value │         │
                    └────────────┬─────────────┘           │
                                 ▼                         │
                           ◇◇◇◇◇◇◇◇◇◇◇                    │
                          ◇  Exceed   ◇       No           │
      606──────────────◇  Tolerance   ◇──────────────────┤
                          ◇ Threshold? ◇                   │
                           ◇◇◇◇◇◇◇◇◇◇◇                    │
                                 │ Yes                     │
                                 ▼                         │
                    ┌──────────────────────────┐           │
      607───────────│       Notify User        │           │
                    └────────────┬─────────────┘           │
                                 ▼                         │
                           ◇◇◇◇◇◇◇◇◇◇◇                    │
                          ◇  Continue  ◇       Yes          │
      608──────────────◇   Charge?    ◇──────────────────┘
                          ◇◇◇◇◇◇◇◇◇◇◇
                                 │ No
                                 ▼
                    ┌──────────────────────────────────┐
      609───────────│ Stop Charging and Send Stop Message │
                    └────────────┬─────────────────────┘
                                 ▼
                    ┌──────────────────────────────────┐
      610───────────│  Send Alarm Message to 3rd Party  │
                    └────────────┬─────────────────────┘
                                 ▼
                            ╭─────────╮
                            │   End   │
                            ╰─────────╯
```

**Figure 5**

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61420889 A